# EUROPÄISCHE PATENTSCHRIFT

(11) **EP 3 631 902 B1**
(45) Veröffentlichungstag und Bekanntmachung des Hinweises auf die Patenterteilung: **22.03.2023**
(21) Anmeldenummer: 18725417.2
(22) Anmeldetag: 03.05.2018
(51) Int. Cl.: H01R 9/26, B29C 45/00, H01R 43/18, B29C 45/16, G09F 3/00

(54) **VERFAHREN UND VORRICHTUNG ZUM MARKIEREN VON REIHENKLEMMEN**
METHOD AND DEVICE FOR MARKING TERMINAL BLOCKS
PROCÉDÉ ET DISPOSITIF DE MARQUAGE DE BARRETTES À BORNES

(30) Priorität: 26.05.2017 DE 102017111523
(43) Veröffentlichungstag der Anmeldung: 08.04.2020
(73) Patentinhaber: Weidmüller Interface GmbH & Co. KG, 32758 Detmold (DE)
(72) Erfinder: HETLAND, Detlev, 32760 Detmold (DE); GOCKEL, Michael, 33014 Bad Driburg (DE); MÜNSTERMANN, Jörg, 33189 Schlangen (DE); RUTZ, Andreas, 33619 Bielefeld (DE); SCHEPMANN, Arnd, 32756 Detmold (DE); WALDHOFF, Marco, 32839 Steinheim (DE)
(74) Vertreter: Specht, Peter
(86) Internationale Anmeldenummer: PCT/EP2018/061411
(87) Internationale Veröffentlichungsnummer: WO 2018/215186

(56) Entgegenhaltungen:
- EP-A1- 0 352 347
- EP-B1- 2 214 267
- WO-A1-2016/184457
- DE-A1-102015 102 958
- FR-A1- 2 773 341
- FR-A1- 2 917 003

## Beschreibung

Die Erfindung betrifft ein Verfahren zum Markieren einer Reihenklemme, insbesondere einer auf eine Montagebasis, insbesondere eine Tragschiene, montierbaren Reihenklemme und eine nach dem Verfahren mit einem Markierer versehene Reihenklemme und eine Reihenklemmenanordnung.

Aus der FR 2773341 sind mehrfarbige Gehäuse für elektrische Komponenten bekannt. Zudem ist ein Verfahren zur Herstellung dieser Gehäuse bekannt, bei dem in einer Spritzform gleichzeitig Teilbereiche aus Kunststoff mit verschiedener Farbe ausgebildet werden.

Es ist bekannt, Reihenklemmen mit Rastmitteln, insbesondere einer oder mehreren Rastnuten, zu versehen, die in ihrem Zusammenspiel bei einer auf eine Tragschiene aufgerasteten Reihenklemmenanordnung einen sich über mehrere der Reihenklemmen erstreckenden Rastkanal ausbilden.

In die Rastnuten können sodann Markierer, d.h. in der Regel kleine Kunststoffschildchen mit Rastfüßen zum Eingriff in die Rastnut(en) aufgerastet werden.

Zum Stand der Technik werden die insoweit US 4,637,676 und die GB 2 260 654 genannt.

In Hinsicht auf eine nachträgliche Beschriftung einer bereits auf eine Tragschiene montierten Reihenklemmenanordnung wird in der EP 2 214 267 B1 ein Verfahren zum Markieren einer Reihenklemmenanordnung aus einzelnen, vorzugsweise auf eine Montagebasis, insbesondere eine Tragschiene, montierten Reihenklemmen vorgeschlagen, dass sich dadurch auszeichnet, dass auf die Reihenklemmenanordnung vorzugsweise nach der Montage auf der Tragschiene eine aushärtbare Kunststoff-Formmasse aufgebracht wird, die nach ihrem Aushärten eine sich vorzugsweise über mehr als eine Reihenklemmen der Reihenklemmenanordnung erstreckende Markierfläche ausbildet, welche nach ihrem Aushärten mit einer Beschriftung versehen wird. Dazu wird über die auf der Tragschiene gebildete Reihenklemmenanordnung auf mehreren Reihenklemmen eine verstreichbare Masse aufgebracht und glattgestrichen. Dies kann nach der EP 2 214 267 B1 mittels Dispenser und Formgeber erfolgen, mit dem nach dem Auftragen wie mit einem Spachtel über die aufgebrachte Masse gestrichen wird, um sie zu glätten.

Dazu ist es allerdings erforderlich, zunächst die Reihenklemmenanordnung auszubilden und dann die sich über mehrere Reihenklemmen erstreckende Reihenklemmenanordnung auszubilden, was relativ aufwendig und nicht immer möglich ist.

Die Erfindung hat die Aufgabe, dieses Problem zu lösen und ein verbessertes Verfahren zum Markieren einer Reihenklemme zu schaffen.

Die Erfindung löst diese Aufgabe durch den Gegenstand des Anspruchs 1.

Nach Anspruch 1 wird ein Verfahren geschaffen, mit dem eines oder mehrere mit einer Beschriftung versehbare Markiererelemente an einer Reihenklemme ausgebildet werden, die auf eine Montagebasis, insbesondere eine Tragschiene, montierbar ist und die ein Gehäuse aus Kunststoff und zumindest einen oder mehrere in dem Gehäuse ausgebildete Leiteranschlüsse sowie eine oder mehrere in dem Gehäuse ausgebildete Markiereraufnahme(n) aufweist, die jeweils zum Anbringen eines entsprechenden Markiererelementes ausgebildet ist, sind, mit folgenden Schritten:
a) Bereitstellen der Reihenklemme mit dem Gehäuse vor oder nach dem Montieren der Leiteranschlüsse und eines Spritzgießwerkzeugs, in die das Gehäuse eingelegt ist, wobei im Bereich der einen oder mehreren Markiereraufnahmen einer oder mehrere Freiräume ausgebildet ist/sind;
b) Ausspritzen des wenigstens einen Freiraums oder der mehreren Freiräume im Bereich der Markiereraufnahmen mit einem Kunststoff, wodurch eines oder mehrere beschriftbare Markiererelemente an dem Gehäuse ausgebildet wird/werden.

Der Freiraum und das Gehäuse der Reihenklemme begrenzen bis auf eine Einspritzöffnung die Markiereraufnahme, und zwar vorzugsweise vollständig oder nahezu vollständig. Derart kann ein besonders gut an das Gehäuse abgestimmtes Markierelement geschaffen werden, dass optimal an das Gehäuse abgestimmt ist.

Derart wird anders als nach der EP 2 214 267 B1 ein definierteres, klarer begrenzteres Markiererelement an dem Gehäuse der Reihenklemme ausgebildet, das mit modernen Lasern gut beschriftbar ist. Hervorzuheben ist insbesondere, dass derart eine automatisierte Ausbildung der Markiererelemente möglich ist, während nach dem Stand der Technik das Anbringen der Markiererelemente an einzelnen Reihenklemmen der Reihenklemmenanordnung - da kein definierter Freiraum in einem Spritzgießwerkzeug gebildet worden war, - quasi nicht sinnvoll möglich war.

Es kann nach einer vorteilhaften Variante vorteilhaft vorgesehen sein, wenn eine oder mehrere der Markiereraufnahmen vor Durchführen des Schrittes b) einen oder mehrere Hinterschnitte aufweisen, die zur formschlüssigen Fixierung wenigstens eines Markiererelementes geeignet sind. Denn derart werden die Markiererelemente auf einfache Weise an dem Gehäuse gehalten, mit dem sie vorzugsweise nicht stoffschlüssig verbunden sind sondern nur formschlüssig. Derart ergibt sich hinsichtlich der Reihenklemmen der Vorteil, dass ein und dieselben Bauarten von Reihenklemmen wahlweise für das Anbringen von anrastbaren Markiererschildern oder für das Anspritzen von Markiererelementen nutzbar sind. So kann für einen ersten Kunden eine Charge von Reihenklemmen ohne angespritzte Markiererelemente gefertigt werden. Dieser kann dann anrastbare Markiererelemente einsetzen. Es kann aber auch für einen anderen Auftrag oder anderen Kunden, der eine Beschriftung mit einem Roboter und/oder einem Laser nutzen will, eine andere Charge mit angespritzten Markiererschildern hergestellt werden.

Vorteilhaft ist, wenn nach einer Variante in dem Spritzgusswerkzeug eine bündige Oberfläche zwischen den Markiererelementen und den Gehäusen der Reihenklemmen 1 geschaffen wird, welche den optischen Eindruck der Reihenklemmen nicht beeindruckt und welche gut lesbar beschriftbar ist. Dies ist besonders vorteilhaft aber nicht zwingend.

Geschaffen wird zudem eine Reihenklemme, die nach einem oder mehreren der Verfahrensansprüche mit einem oder mehreren Markierelementen versehen worden ist.

Der Begriff der Reihenklemme ist zudem nicht zu eng zu fassen. Er umfasst elektrische Reihenklemmen zum Anschließen von Leitern aber beispielsweise auch sonstige auf eine Montagebasis aufreihbare Gehäuse.

Vorteilhafte Ausgestaltungen der Erfindung sind den Unteransprüchen zu entnehmen.

Nachfolgend wird die Erfindung anhand von Ausführungsbeispielen näher beschrieben. Dabei werden auch zahlreiche vorteilhafte Optionen und sinnvolle Weiterbildungen erläutert. Es zeigt:
- Fig. 1: eine perspektivische Ansicht einer auf eine Tragschiene montierten Reihenklemme ohne Markierelement;
- Fig. 2: die Reihenklemme aus Fig. 1 mit mehreren daran ausgebildeten Markierelementen;
- Fig. 3: die Reihenklemme aus Fig. 2 mit gegenüber Fig. 2 weiteren daran ausgebildeten Markierelementen;

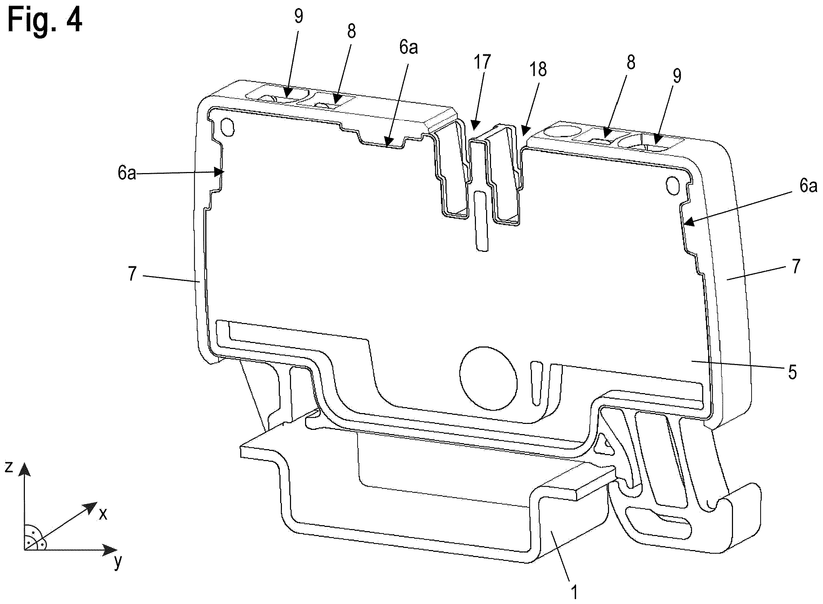

- Fig. 4: die Reihenklemme aus Fig. 1 mit gegenüber Fig. 2 anderen daran ausgebildeten Markierelementen;
- Fig. 5: eine weitere Reihenklemme mit daran ausgebildeten Markierelementen;
- Fig. 6: eine erste Reihenklemmenanordnung aus erfindungsgemäßen Reihenklemmen mit einem darüber abgebildeten Querverbinder mit einem oder mehreren daran ausgebildeten Markierelementen und mit einem in einen Querverbinderkanal der Reihenklemmenanordnung eingesteckten Querverbinder mit einem oder mehreren daran ausgebildeten Markierelementen;
- Fig. 7: einen Querverbinder für eine Reihenklemme, diese insbesondere nach Art der Fig. 1, mit einem oder mehreren daran ausgebildeten Markierelementen und in b) und c) Seitenansichten von Variante eines solchen Querverbinders;
- Fig. 8: in a) eine perspektivische Ansicht eines Spritzgießwerkzeugs zum Anbringen eines Markierelementes an einem Gehäuse einer Reihenklemme und in b) eine Ausschnittsvergrößerung aus a).

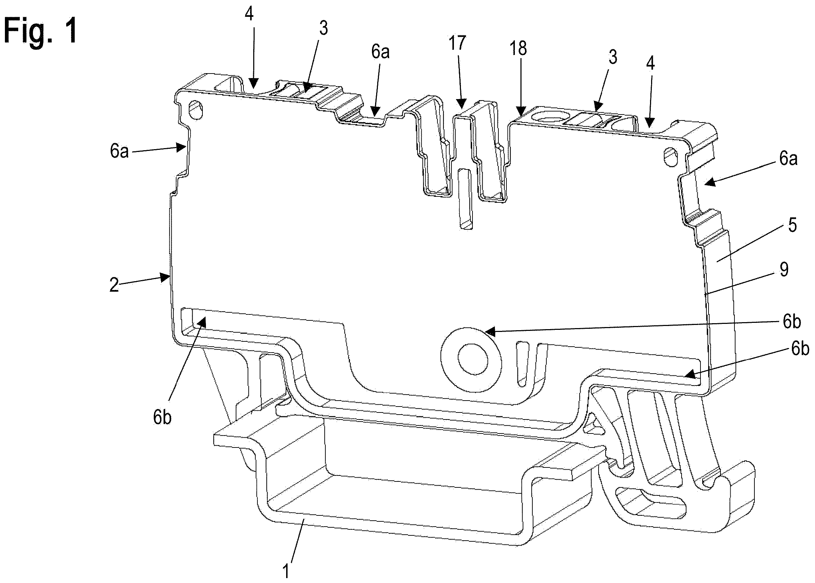

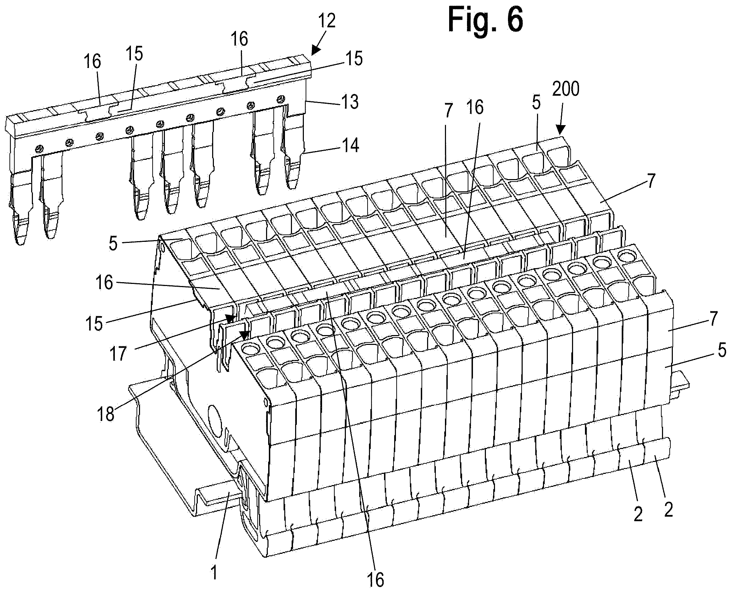

Fig. 1 zeigt eine perspektivische Ansicht einer auf eine Tragschiene 1 montierten Reihenklemme 2, die mit weiteren, hier nicht dargestellten, einzelnen Reihenklemmen auf der Tragschiene 1 zu einer Reihenklemmenanordnung (siehe aber Fig. 6) zusammenstellbar ist.

Die Reihenklemme 2 weist neben (hier nicht zu erkennenden) Leiteranschlüssen (siehe aber die Leiter und Betätigungseinführöffnungen 3, 4), ein Gehäuse 5 mit wenigstens einer oder mehrere sich in Tragschienenrichtung X erstreckenden Markiereraufnahmen 6a, b auf. Das Gehäuse 5 ist ein- oder mehrteilig ausgebildet. Es kann eine Seitenwand (Rückwand) aufweisen und einen Grundkörper. Diese Markiereraufnahmen 6a sind vorzugsweise als Rastnuten ausgebildet. Diese Rastnuten können sodann über mehrere Reihenklemmen 2 hinweg jeweils durchgehende Rastkanäle ausbilden. Das Gehäuse 5 besteht vorzugsweise aus einem nicht elektrisch leitenden Kunststoff.

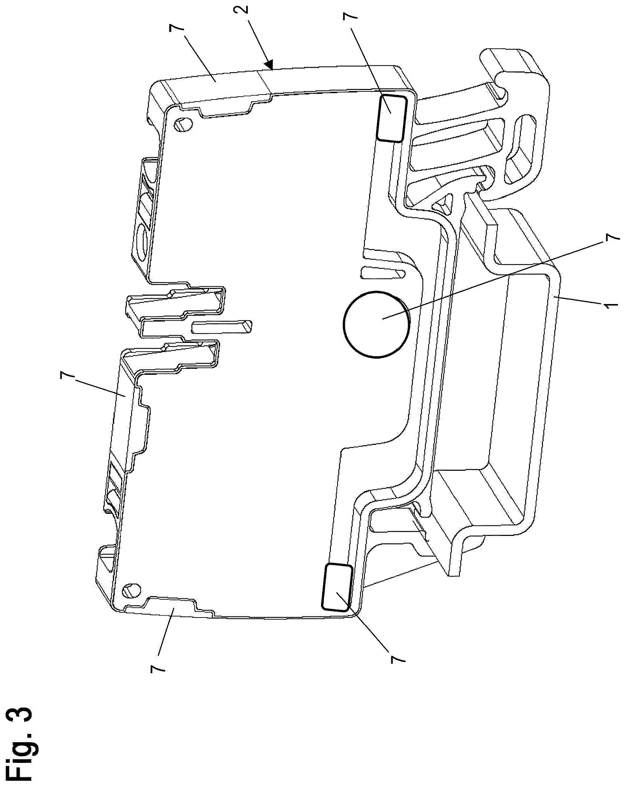

Auf die als Rastnuten ausgebildeten Markiereraufnahmen 6a können - wie in Fig. 3 der EP 2 214 267 dargestellt und dem Fachmann an sich bekannt, zu erkennen - Markiererschilder aufgerastet werden, wobei jede einzelne der Reihenklemmen 3 mit einem der Markiererschilder versehen wird. Diese vorgefertigten Markiererschilder bestehen vorzugsweise aus Kunststoff. Sie werden in der Regel zunächst entsprechend zu einem Verdrahtungsplan als Matte mit Rahmen und mehreren Markiererschildern in einem Drucker bedruckt, dann von einem Rahmen gelöst und einzeln nach der Montage der Reihenklemmen auf einer Tragschiene montiert. Dieses Verfahren, um Reihenklemmen 2 mit Markierungen zu versehen hat sich an sich bewährt und wird vielfach genutzt. Dennoch besteht der Bedarf, Reihenklemmen vereinfacht auch weitgehend automatisiert markieren zu können, insbesondere mit einem Laser vor oder nach der Montage der Reihenklemmen auf der Tragschiene.

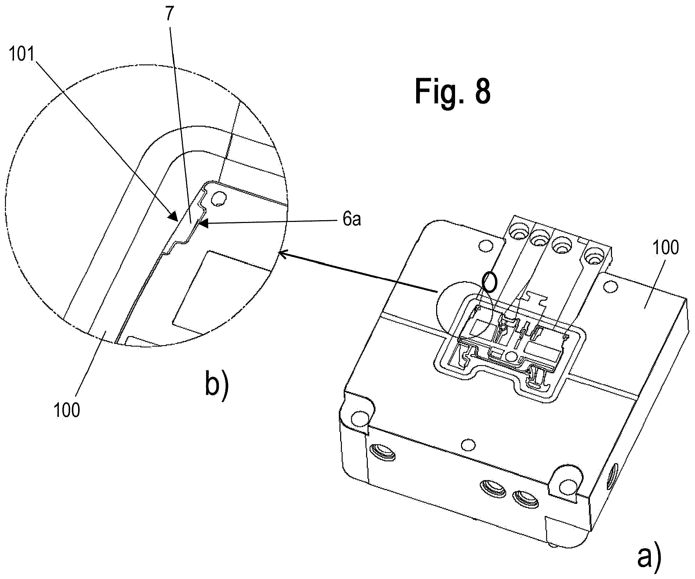

Die Erfindung erreicht dieses Ziel dadurch, dass in die eine oder mehrere der Markiereraufnahmen 6 der einzelnen Reihenklemmen nach dem Herstellen des jeweiligen Gehäuses 5 der Reihenklemmen 2 in einem Freiraum 101 eines Spritzgießwerkzeugs 100 (Fig. 8a, b), dass die Markiereraufnahmen 6 zu wenigstens einer oder mehreren Seiten hin - vorzugsweise bis auf eine Einspritzöffnung vollständig rundum - begrenzt, ein Markiererelement 7 an das bereits gespritzte Gehäuse 5 aus Kunststoff angespritzt wird. Vorzugsweise erfolgt dieses Anspritzen derart, dass die derart gebildeten Markiererelemente 7 bündig mit einer oder mehreren, vorzugsweise sämtlichen, die Markiereraufnahme begrenzenden Flächen des Gehäuses bündig abschließen. Das Anbringen des oder der Markierelemente(s) 7 erfolgt vor dem Aufrasten auf eine Tragschiene.

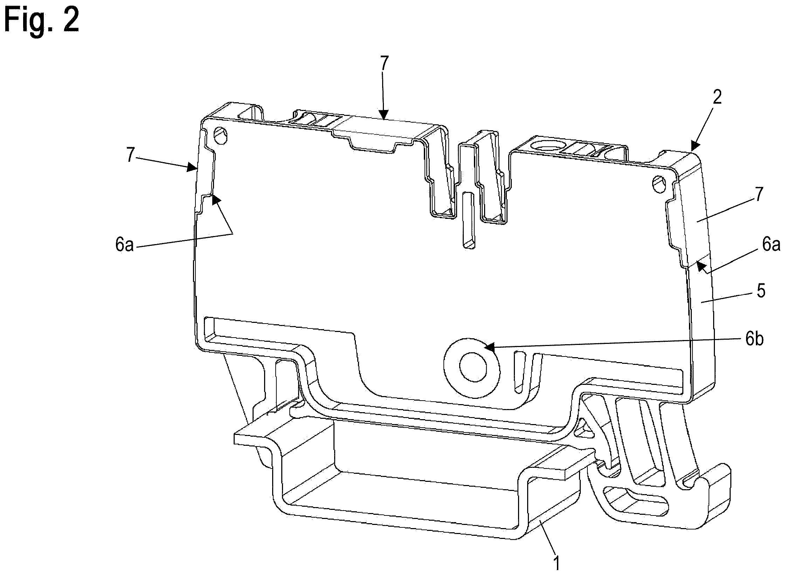

Hierdurch werden an dem Gehäuse 5 der Reihenklemme 2 Markiererelemente 7 ausgebildet, die vorzugsweise formschlüssig aber nicht stoffschlüssig in der oder den Markiereraufnahmen 6 befestigt und gesichert sind. Nach Fig. 2 sind diese an der von der Tragschiene 1 abgewandten Oberseite und in Seitenbereichen des Gehäuses an einer oder mehreren Schmalseiten des Gehäuses 5 ausgebildet.

Diese Markiererelemente 7 können sodann vor oder nach der Montage beschriftet werden. Dieses Beschriften erfolgt vorzugsweise automatisiert mit einem Laser, der die Oberfläche des wenigstens einen Markiererelementes der jeweiligen Reihenklemme 2 nach Art einer Gravur, eines Auftragens eines Toners oder durch sonstige physikalisch-chemische Beeinflussung so verändert, dass an ihr eine Beschriftung erkennbar ist.

Die Markiereraufnahme(n) 6 ist/sind vorzugsweise als eine oder mehrere Vertiefungen des Gehäuses 5 ausgebildet.

Vorteilhaft ist, wenn in dem Spritzgusswerkzeug eine bündige Oberfläche zwischen den Markiererelementen und den Gehäusen 5 der Reihenklemmen 2 geschaffen wird, welche den optischen Eindruck der Reihenklemmen nicht beeindruckt und welche gut lesbar beschriftbar ist.

Die jeweilige Markiereraufnahme 6a kann dabei als eine Nut ausgebildet sein, die derart an dem Gehäuse ausgebildet ist, dass sie in Anreihrichtung bzw. Tragschienenrichtung X mit weiteren Nuten einen durchgehenden Markiererkanal ausbildet. Nur erstreckt sich das zugehörige in diese jeweilige Markiereraufnahme 6 a eingespritzte Markiererelement 7 dann nicht durchgehend über mehrere aneinander gereihte Reihenklemmen 2 sondern schließt in Anreihrichtung mit dem jeweiligen Gehäuse 5 ab, vorzugsweise bündig ab. Fig. 1 zeigt an dem Gehäuse 5 beispielhaft drei solcher Markiereraufnahmen 6a. In Fig. 2 ist in diese jeweils eines der Markiererelemente 7 in einem Freiraum 101 eines Spritzgießwerkzeugs eingespritzt worden. Die Beschriftungen sind dann insbesondere an zu der Anreihrichtung X senkrecht (oder ggf. bei weiteren Ausgestaltungen auch winklig) ausgerichteten Flächen des Gehäuses 5 anbringbar.

Die jeweilige Markiereraufnahme 6b kann dabei aber beispielsweise auch an den in einer der Anreihrichtungen liegenden Flächen des Gehäuses 5 ausgebildet sein, insbesondere als eine Vertiefung. In dem Gehäuse 5 der Fig. 1 sind ebenfalls - beispielhaft - drei derartige Markiereraufnahmen 6b ausgebildet. In diesen sind - siehe Fig. 3 - ebenfalls durch Anspritzen der Markiereraufnahmen 6 in einem Freiraum 101 eines Spritzgießwerkzeugs Markiererelemente 7 ausgebildet worden. Die Beschriftungen sind dann insbesondere an zu der Anreihrichtung X parallel ausgerichteten Flächen des Gehäuses 5 anbringbar.

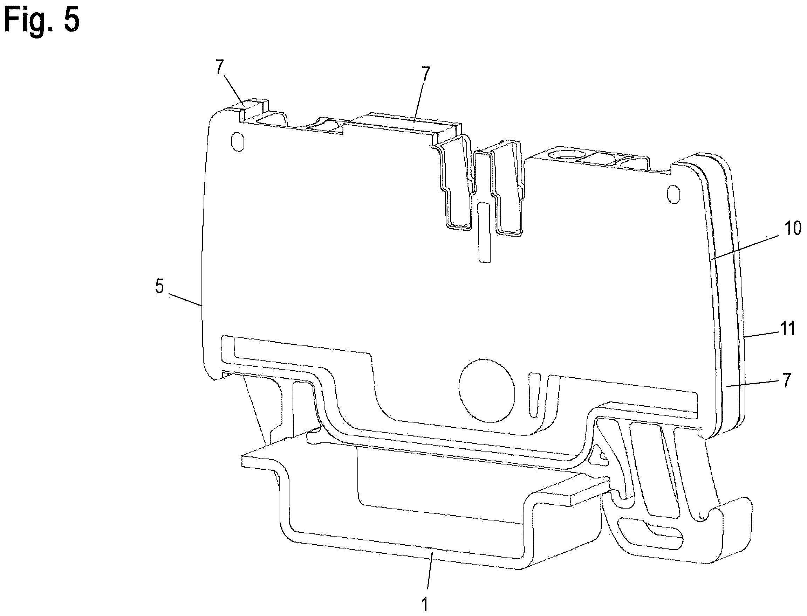

Nach Fig. 2 und 3 schließen die Markiererelemente zu sämtlichen ihrer Ränder hin bündig mit dem Gehäuse 5 ab. Dies führt zu einem ansprechenden optischen Gesamteindruck und zu einer guten Beschriftbarkeit. Dies ist vorteilhaft aber nicht zwingend. Alternativ kann - siehe Fig. 5 - das jeweilige Markiererelement auch definiert - durch das Spritzgießwerkzeug definiert begrenzt - in X-, Y-, oder Z-Richtung über den entsprechenden Rand des Gehäuses 5 vorstehen oder vertieft zu diesem ausgebildet sein (letzteres ist nicht dargestellt).

So wird nach dem Ausführungsbeispiel der Fig. 5 ein Markiererelement 7 oder es werden mehrere Markiererelemente 7 ausgebildet, welche das Gehäuse 5 hier im Wesentlichen senkrecht zur Anreihrichtung X schalenartig partiell einhüllen oder sogar abschnittsweise umgreifen. Derart können relativ zu den Gehäusen 5 große Markierelemente 7 ausgebildet werden, welche mit einer besonders großflächigen Beschriftung versehen werden können. Diese Markiererelemente 7 können selbst eine oder mehrere Öffnungen 8, 9 aufweisen, um Funktionselemente wie die Einführöffnungen 3, 4 für Leiter oder für Drücker zum Öffnen einer Klemmstelle oder dgl. nicht abzudecken. Sie können sich zudem auch um Ecken der Gehäuse 5 herum erstrecken.

Die Markiereraufnahme 6 kann auch als Vertiefungsbereich zwischen in Anreihrichtung liegenden Wänden 10, 11 des Gehäuses 5 ausgebildet sein. Derart können an einer oder mehreren in Anreihrichtung X liegenden Bereichen streifenartige Markiererelemente 7 ausgebildet werden, die sich auch um Ecken der Gehäuse 5 erstrecken können und die vorteilhaft ebenfalls mit einer größeren oder längeren Beschriftung versehbar sind (siehe Fig. 5).

Dabei bietet sich hinsichtlich der Reihenklemmen der Vorteil, dass ein und dieselben Gehäuse 5 bzw. Basis-Reihenklemmen 2 wahlweise für das Anbringen von anrastbaren Markiererschildern oder für das Anspritzen von Markiererelementen 7 nutzbar sind. Gegenüber dem Stand der Technik muss derart die eigentliche Reihenklemme bzw. Basisklemme ohne Markierschild aber vorzugsweise mit Rastaufnahmen für eines oder mehrere Markiererschild(er) nicht grundsätzlich verändert werden.

Zudem muss bei Verwendung eines geeigneten Kunststoffs - wie z.B. Polyamid oder Polycarbonat - keine erneute elektrische Zulassung erlangt werden, da durch die angespritzten Markiererelemente - insbesondere wenn diese aus einem nicht elektrisch leitenden Kunststoff bestehen, deren Zulassung nicht gefährdet wird.

Dabei kann das Markiererelement 7 aus dem gleichen Kunststoff bestehen wie das Gehäuse 5. Das Markiererelement 7 kann aber auch aus einem anderen Kunststoff bestehen, insbesondere aus einem andersfarbigen Kunststoff als das Gehäuse 5. So kann das Markiererelement 7 heller ausgebildet sein als das übrige Gehäuse 5. Alternativ kann es aber auch dunkler oder eben vollständig andersfarbig ausgebildet sein. Es kann auch ein Funktionskunststoff verwendet werden, so ein transluzenter Kunststoff oder ein fluoreszierender oder phosphoreszierender Kunststoff, um das jeweilige Markiererelement 7 besser erkennen zu können.

Das Anspritzen der Markiererelemente erfolgt im Anschluss an das Spritzen des Gehäuses 5, vorzugsweise unmittelbar im Anschluss an das Spritzen des Gehäuses 5 noch in dem Spritzgießwerkzeug, in welchem das Gehäuse 5 gespritzt worden ist. Es werden dann lediglich die Bereiche zum Ausspritzgießen freigegeben - beispielsweise durch Ausziehen eines Schiebeelementes, in welchen die eine oder mehreren Markieraufnahme(n) 6 bei dem Spritzen des Gehäuses 5 ausgebildet worden sind. Dann werden der oder die sich derart bildenden Freiräume - die hier eine Art Formnest ausbilden - in einem weiteren Arbeitsgang ausgespritzt, um das oder die jeweiligen Markierelemente 7 zu bilden. Es kann dabei auch eine Art 2K-Verfahren verwendet werden.

Das Spritzgießen der Markiererelemente kann aber auch später erfolgen. Dazu werden die Reihenklemmen 5 erneut in ein entsprechendes Spritzgießwerkzeug eingelegt und dann die Bereiche ausgespritzt, in welchen die Markiereraufnahme(n) 6 bei dem ersten Spritzgießen des Gehäuses 5 ausgebildet worden sind und dann in einem weiteren Arbeitsgang ausgespritzt, um die jeweiligen Markierelemente 7 auszubilden.

Das jeweilige Markiererelement 7 wird dabei vorteilhaft und einfach im Wesentlichen formschlüssig an dem jeweiligen Gehäuse 5 gehalten. Dazu ist es vorteilhaft, wenn die entsprechende Markiereraufnahme 6 einen oder mehrere Hinterschnitte ausbildet, um das jeweilige Markiererelement 7 gegen ein Ausfallen zu sichern. Denn ein Stoffschluss wird bei dem Anspritzen der Markiererelemente 7 in der Regel nicht oder nur im unwesentlichen Maße ausgebildet. Die Markiererelemente 7 sitzen derart fest und sicher, können aber ggf. - insbesondere wenn sie in Rastnuten angebracht sind - ggf. aus dem Gehäuse 5 ausgedrückt werden (z.B. in Nuten, die in Anreihrichtung offen ausgebildet sind).

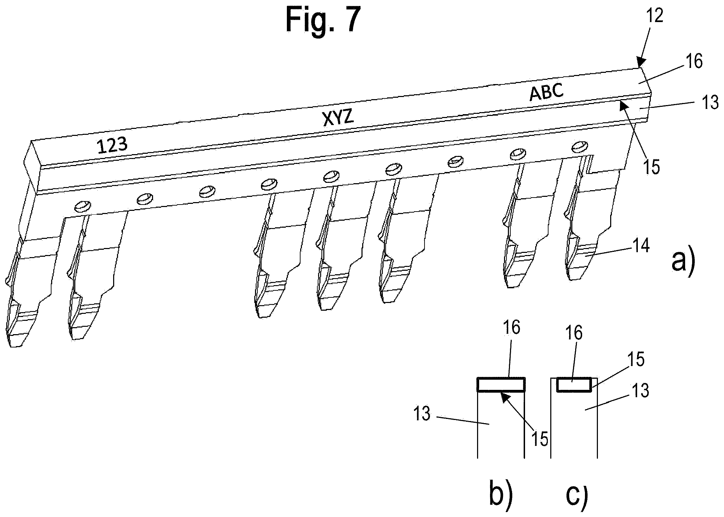

Fig. 6 und 7 zeigen jeweils Querverbinder 12 mit einem Gehäuse 13 aus Kunststoff, einer Reihe von Anschlusssteckern 14 (also Steck- oder Buchsenelementen) und mit einer oder mehreren Markiereraufnahmen 15, die in dem Gehäuse 13 ausgebildet sind. Diese ist/sind wie die Markiereraufnahmen 6 der Gehäuse 5 der Reihenklemmen 2 mit einem oder mehreren in einem Freiraum 101 eines Spritzgießwerkzeugs angespritzten Markierelement 16 versehen. Derart wird auch die Beschriftung der Querverbinder zum Einstecken in einen Querverbinderkanal 17, 18 einer Reihenklemmenanordnung 200 aus den Reihenklemmen 2 (siehe Fig. 6) einfach optimiert. Hinsichtlich der Anordnung und Auslegung gelten sinngemäß die vorstehenden Ausführungen, wobei sie sich dann auf das Gehäuse 5 der Querverbinder 12 beziehen. Der Freiraum kann sich auch über die gesamte Länge des Querverbinders erstrecken bzw. über dessen gesamte von den Anschlusssteckern 14 abgewandt liegende äußere Oberfläche. Das Markiererelement 16 erstreckt sich dann ebenfalls über die gesamte von den Anschlusssteckern 14 abgewandt liegende Seite bzw. Fläche der Querverbinder.

Damit ergibt/ergeben sich an den Reihenklemmen 2 und/oder deren Querverbindern 11 jeweils eine oder mehrere Flächen, die einer Laserbeschriftung zugänglich sind, indem beispielsweise unmittelbar vor der Montage die einzelne Reihenklemme mit einem Roboter gegriffen, an einen Laser gehalten und dort von diesem beschriftet wird.

Anzumerken, ist, dass derart ggf. auch auf einfache Weise bei Reihenklemmen unterschiedlicher Größe und Konturen jeweils eine Markierung anbringbar ist.

**Bezugszeichen**

| | |
|---|---|
| Tragschiene | 1 |
| Reihenklemme | 2 |
| Betätigungsöffnungen | 3 |
| Leitereinführöffnungen | 4 |
| Gehäuse | 5 |
| Tragschienenrichtung | X |
| Markiereraufnahmen | 6 |
| Markiererelement | 7 |
| Öffnungen | 8,9 |
| Wände | 10, 11 |
| Querverbinder | 12 |
| Gehäuse | 13 |
| Anschlusselemente | 14 |
| Markiereraufnahme | 15 |
| Markierelement | 16 |
| Querverbinderkanal | 17, 18 |
| Spritzgießwerkzeug | 100 |
| Freiraum | 101 |
| X-, Y-, Z-Richtung | |

## Patentansprüche

1. Verfahren, mit dem eines oder mehrere mit einer Beschriftung versehbare Markiererelemente (7) an einer Reihenklemme ausgebildet werden, die auf eine Montagebasis, insbesondere eine Tragschiene, montierbar ist und die ein Gehäuse (5) aus Kunststoff und zumindest einen oder mehrere in dem Gehäuse (5) ausgebildete Leiteranschlüsse sowie eine oder mehrere in dem Gehäuse (5) ausgebildete Markiereraufnahme(n) (6) aufweist, die jeweils zum Anbringen eines entsprechenden Markiererelementes (7) ausgebildet ist, sind, mit folgenden Schritten:
a) Bereitstellen der Reihenklemme mit dem Gehäuse (5) vor oder nach dem Montieren der Leiteranschlüsse (4) und eines Spritzgießwerkzeugs (100), in dass das Gehäuse (5) eingelegt ist, wobei im Bereich der einen oder mehreren Markiereraufnahmen (6) einer oder mehrere Freiräume (101) ausgebildet ist/sind;
b) Ausspritzen des wenigstens einen oder der mehreren Freiraumes (101) im Bereich der einen oder mehreren Markiereraufnahmen (7) mit einem Kunststoff, wodurch eines oder mehrere beschriftbare Markiererelemente (7) an dem Gehäuse (5) ausgebildet wird/werden.

2. Verfahren nach Anspruch 1, **dadurch gekennzeichnet, dass** eine oder mehrere der Markiereraufnahmen (6) vor Durchführen des Schrittes b) einen oder mehrere Hinterschnitte aufweisen, die zur formschlüssigen Fixierung des jeweiligen Markiererelementes (7) geeignet sind.

3. Verfahren nach einem der vorstehenden Ansprüche, **dadurch gekennzeichnet, dass** das oder die Markiererelemente (7) nicht stoffschlüssig mit dem Gehäuse (5, 13) verbunden sind.

4. Verfahren nach Anspruch 1, 2 oder 3, **dadurch gekennzeichnet, dass** eine oder mehrere der Markiereraufnahmen (6) als Rastnut ausgebildet sind.

5. Verfahren nach einem der vorstehenden Ansprüche, **dadurch gekennzeichnet, dass** eine oder mehrere der Markiereraufnahmen (6) derart in Anreihrichtung an dem Gehäuse (5) ausgebildet ist/sind, dass eine Beschriftung an dem entsprechenden Markiererelement (7) an einer senkrecht oder winklig zur Anreihrichtung ausgebildeten Fläche anbringbar ist.

6. Verfahren nach Anspruch 5, **dadurch gekennzeichnet, dass** eine oder mehrere der Markiereraufnahmen (6) derart an dem Gehäuse (5) ausgebildet ist/sind, dass eine Beschriftung an dem entsprechenden Markiererelement (7) an einer parallel zur Anreihrichtung ausgebildeten Fläche anbringbar ist.

7. Verfahren nach einem der vorstehenden Ansprüche, **dadurch gekennzeichnet, dass** eines oder mehrere der Markierelemente (7) das Gehäuse (4) partiell schalenartig einfassen.

8. Verfahren nach einem der vorstehenden Ansprüche, **dadurch gekennzeichnet, dass** eines oder mehrere der Markierelemente (7) zwischen Seitenwänden des Gehäuses (5) ausgebildet sind.

9. Verfahren nach einem der vorstehenden Ansprüche, **dadurch gekennzeichnet, dass** das oder die Markiererelemente (7) an sämtlichen Rändern bündig mit dem Gehäuse (5) abschließen.

10. Verfahren nach einem der vorstehenden Ansprüche, **dadurch gekennzeichnet, dass** das oder die Markiererelemente (7) an einem oder mehreren Rändern über das Gehäuse (5) vorstehen oder gegenüber diesem oder diesen Rand oder Rändern vertieft ausgebildet ist/sind.

11. Verfahren nach einem der vorstehenden Ansprüche, **dadurch gekennzeichnet, dass** das oder die Markiererelemente (7) aus dem gleichen Kunststoff wie Gehäuse ((5) bestehen.

12. Verfahren nach Anspruch 11, **dadurch gekennzeichnet, dass** das oder die Markiererelemente (7) aus einem helleren, dunkleren und/oder andersfarbigen Kunststoff als das Gehäuse (5) bestehen.

13. Verfahren nach Anspruch 12, **dadurch gekennzeichnet, dass** das oder die Markiererelemente (7) aus einem gleichfarbigen Kunststoff als das Gehäuse (5) bestehen.

14. Verfahren nach einem der vorstehenden Ansprüche, **dadurch gekennzeichnet, dass** das oder die Markiererelemente (7) aus einem Funktionskunststoff, - einem transluzenten oder fluoreszierenden Kunststoff - bestehen.

15. Verfahren nach einem der vorstehenden Ansprüche, **dadurch gekennzeichnet, dass** an einem Querverbinder (12) mit einem Gehäuse (13) aus Kunststoff, einer Reihe von Anschlusssteckern (14) und mit einer oder mehreren Markiereraufnahmen (15) in dem Gehäuse (13) in einem Freiraum eines Spritzgießwerkzeugs angespritzte Markierelemente (16) ausgebildet werden.

16. Verfahren nach einem der vorstehenden Ansprüche, **dadurch gekennzeichnet, dass** der Freiraum des Spritzgießwerkzeugs und das Gehäuse der Reihenklemme bis auf eine Einspritzöffnung die Markiereraufnahme vollständig begrenzen.

## Claims

1. A method, with which one or more marking elements (7) that can be provided with an inscription are formed on a terminal block, which can be mounted on a mounting base, in particular a support rail, and which has a housing (5) made of plastic and at least one or more conductor connections formed in the housing (5), as well as one or more marking recesses (6) formed in the housing (5), with each marking recess being designed for the application of a corresponding marking element (7), wherein the method comprises the following steps:
a) providing the terminal block with the housing (5) before or after the mounting of the conductor connections (4) and providing an injection molding tool (100) into which the housing (5) is inserted, wherein one or more free spaces (101) is/are formed in the region of the one or more marking recesses (6);
b) spraying the at least one or more free spaces (101) with a plastic in the region of the one or more marking recesses (7), whereby one or more inscribable marking elements (7) is/are formed on the housing (5).

2. The method according to Claim 1, **characterized in that**, before step b) is carried out, one or more of the marking recesses (6) comprise one or more undercuts which are suitable for the positive-fitting connection of the respective marking element (7).

3. The method according to any one of the preceding claims, **characterized in that** the marking element(s) (7) are not connected by material bonding to the housing (5, 13).

4. The method according to Claim 1, 2 or 3, **characterized in that** one or more of the marking recesses (6) are formed as a latching groove.

5. The method according to any one of the preceding claims, **characterized in that** one or more of the marking recesses (6) is/are formed in such a manner in the row direction on the housing (5) that an inscription can be provided on the respective marking element (7) on a surface formed perpendicularly to or at an angle relative to the row direction.

6. The method according to claim 5, **characterized in that** one or more of the marking recesses (6) is/are formed in such a manner on the housing (5) that an inscription can be provided on the corresponding marking element (7) on a surface formed parallel to the row direction.

7. The method according to any one of the preceding claims, **characterized in that** one or more of the marking elements (7) partially enclose the housing (4) in the manner of a shell.

8. The method according to any one of the preceding claims, **characterized in that** one or more of the marking elements (7) are formed between side walls of the housing (5).

9. The method according to any one of the preceding claims, **characterized in that** the marking element(s) (7) end at all the edges flush with the housing (5).

10. The method according to any one of the preceding claims, **characterized in that** the marking element(s) (7) protrude(s) at one or multiple edges across the housing (5) or form a deepening relative to said housing or said edge or said edges.

11. The method according to any one of the preceding claims, **characterized in that** the marking element(s) (7) are made of the same plastic as housing (5).

12. The method according to claim 11, **characterized in that** the marking element(s) (7) are made of a lighter, a darker and/or a differently colored plastic than the housing (5).

13. The method according to claim 12, **characterized in that** the marking element(s) (7) are made of a plastic of the same color as the housing (5).

14. The method according to any one of the preceding claims, **characterized in that** the marking element(s) (7) are made of a functional plastic- a translucent or fluorescent plastic.

15. The method according to any one of the preceding claims, **characterized in that**, on a transverse connector (12) with a housing (13) made of plastic, with a row of connection plugs (14) and with one or more marking recesses (15) in the housing (13), marking elements (16) overmolded in a free space of an injection molding tool are formed.

16. The method according to any one of the preceding claims, **characterized in that** the free space of the injection molding tool and the housing of the terminal block completely delimit the marking recess except for an injection opening.

## Revendications

1. Procédé permettant de former un ou plusieurs éléments de marquage (7) pouvant être munis d'inscriptions sur une borne série qui peut être montée sur une base de montage, en particulier un rail porteur, et qui comprend un boîtier (5) en plastique et au moins un ou plusieurs branchements de connecteurs formés dans le boîtier (5), ainsi qu'un ou plusieurs logements de marquage (6) formés dans le boîtier (5), qui sont conçus chacun pour la mise en place d'un élément de marquage (7) correspondant, comprenant les étapes suivantes :
a) préparation de la borne série avec le boîtier (5) avant ou après le montage des branchements de conducteurs (4) et d'un outil de moulage par injection (100) dans lequel le boîtier (5) est inséré, un ou plusieurs espaces libres (101) étant formés dans la région des un ou plusieurs logements de marquage (6) ;
b) injection d'une matière plastique dans l'au moins un ou les plusieurs espaces libres (101) dans la région des un ou plusieurs éléments de marquage (7) pour former un ou plusieurs éléments de marquage (7) pouvant être munis d'une inscription sur le boîtier (5).

2. Procédé selon la revendication 1, **caractérisé en ce qu'**un ou plusieurs logements de marquage (6) présentent avant l'exécution de l'étape b) une ou plusieurs contre-dépouilles qui conviennent pour la fixation par engagement positif de l'élément de marquage (7) correspondant.

3. Procédé selon l'une des revendications précédentes, **caractérisé en ce que** le ou les éléments de marquage (7) ne sont pas reliés au boîtier (5, 13) par solidarité de matière.

4. Procédé selon la revendication 1, 2 ou 3, **caractérisé en ce qu'**un ou plusieurs des logements de marquage (6) sont conformés comme une rainure d'enclenchement.

5. Procédé selon l'une des revendications précédentes, **caractérisé en ce qu'**un ou plusieurs des logements de marquage (6) sont formés dans le sens d'alignement sur le boîtier (5) de telle manière qu'un marquage puisse être appliqué sur l'élément de marquage (7) correspondant sur une surface perpendiculaire ou formant un angle par rapport au sens d'alignement.

6. Procédé selon la revendication 5, **caractérisé en ce qu'**un ou plusieurs des logements de marquage (6) sont formés sur le boîtier (5) de telle manière qu'un marquage puisse être inscrit sur l'élément de marquage (7) correspondant sur une surface parallèle au sens d'alignement.

7. Procédé selon l'une des revendications précédentes, **caractérisé en ce qu'**un ou plusieurs des éléments de marquage (7) entourent partiellement le boîtier (4) à la manière d'une coque.

8. Procédé selon l'une des revendications précédentes, **caractérisé en ce qu'**un ou plusieurs des éléments de marquage (7) sont formés entre des parois latérales du boîtier (5).

9. Procédé selon l'une des revendications précédentes, **caractérisé en ce que** le ou les éléments de marquage (7) affleurent de niveau avec le boîtier (5) sur tous leurs bords.

10. Procédé selon l'une des revendications précédentes, **caractérisé en ce que** le ou les éléments de marquage (7) dépassent du boîtier (5) sur un ou plusieurs bords ou sont renfoncés par rapport à ce ou ces bords.

11. Procédé selon l'une des revendications précédentes, **caractérisé en ce que** le ou les éléments de marquage (7) sont faits du même plastique que le boîtier (5).

12. Procédé selon la revendication 11, **caractérisé en ce que** le ou les éléments de marquage (7) sont faits d'un plastique plus clair, plus foncé et/ou d'une autre couleur que le boîtier (5),

13. Procédé selon la revendication 12, **caractérisé en ce que** le ou les éléments de marquage (7) sont faits d'un plastique de la même couleur que le boîtier (5).

14. Procédé selon l'une des revendications précédentes, **caractérisé en ce que** le ou les éléments de marquage (7) sont faits d'un plastique fonctionnel translucide ou fluorescent.

15. Procédé selon l'une des revendications précédentes, **caractérisé en ce qu'**une rangée de connecteurs de branchement (14) et des éléments de marquage (16) moulés par injection sont formés avec un ou plusieurs logements de marquage (15) dans le boîtier (13) sont formés sur une traverse de liaison (12) avec un boîtier (13) en plastique dans une cavité d'un outil de moulage par injection.

16. Procédé selon l'une des revendications précédentes, **caractérisé en ce que** l'espace libre de l'outil de moulage par injection et le boîtier de la borne série délimitent entièrement le ou les éléments de marquage, à l'exception d'une ouverture d'injection.
